# EUROPEAN PATENT APPLICATION

(11) **EP 3 285 177 A1**
(43) Date of publication of application: **21.02.2018**
(21) Application number: 16184972.4
(22) Date of filing: 19.08.2016
(51) Int. Cl.: G06F 17/18

(54) **METHOD AND SYSTEM FOR AUTOMATICALLY DETERMINING AN ERROR CONDITION OF A TECHNICAL SYSTEM**

(71) Applicant: Siemens Aktiengesellschaft, 80333 München (DE)
(72) Inventor: Ramanath, Vinay, 560043 Bangalore, Karnataka (IN); Rizvi Khaleeli, Asmi, 560025 Bangalore, Karnataka (IN)
(74) Representative: Patentanwaltskanzlei WILHELM & BECK

(57) **Abstract**

A computer implemented method (100) of automatically determining at least one error condition associated with a technical system (320A-320C), comprising generating one or more datasets each comprising data points corresponding to at least one operation parameter associated with the technical system (320A-320C). The method comprises computing, using a data processing system (200), a probability value for each of the data points in a dataset of the one or more datasets, computing a non-parametric distribution of the probability values corresponding to the data points in the dataset. Thereafter, identifying at least one data point indicative of the at least one error condition associated with the technical system 320A-320C, based on the non-parametric distribution of the probability values. The method also comprises determining the at least one error condition based on the identified data points and the at least one operation parameter of the technical system (320A-320C) and outputting the at least one error condition associated with the technical system (320A-320C) on a display unit 240 of the data processing system (200).

## Description

This invention relates to a computer implemented method of automatically determining at least one error condition associated with a technical system. The method includes generating one or more datasets, each comprising data points corresponding to at least one operation parameter associated with the technical system. The method further includes computing, using a data processing system, a probability value for each of the data points in a dataset of the one or more datasets.

Such a method is already disclosed in the publication, "Local Outlier Probabilities" by Hans-Peter Kriegel et al in the proceeding of the 18th ACM conference on Information and Knowledge Management, pages 1649-1652. The method disclosed therein detects outliers by providing a probability values to data points in the dataset. The method discloses normalizing of the dataset and determining the probability vale based on local density of the data points in the dataset. Although the disclosed method is effective in making the probability values consistent over the dataset, the disclosed method is not efficient on large datasets. The estimation of the local density for large datasets is time consuming. In addition, to reduce the computational costs the method may compromise the accuracy in detecting outliers.

Therefore, it is an object of the present invention to detect outliers in large datasets that more accurately detect the outliers with reduced computational cost.
The method and system according to the present invention achieve the aforementioned object by computing a non-parametric distribution of the probability values corresponding to the data points in the dataset. The method further includes identifying at least one data point indicative of the at least one error condition based on the non-parametric distribution of the probability values, determining the at least one error condition based on the identified data points and the at least one operation parameter of the technical system; and outputting the at least one error condition associated with the technical system on a display unit of the data processing system.

According to the present invention, a computer implemented method of automatically determining at least one error condition associated with a technical system is provided. The method includes generating one or more datasets each comprising data points corresponding to at least one operation parameter associated with the technical system.

As used herein, the term "dataset"/"datasets" refers to data that an electronic device records, for example a sensor. The data recorded by the electronic device is for a particular period of time. In an embodiment, the electronic device records the data in time series. The dataset comprises multiple data points, each representing a recording of the electronic device. As used herein, "data point" is a representation of one or more datums recorded for the at least one operative parameter associated with the technical system. The "at least one operation parameter" refers to one or more characteristics of the technical system. For example, if a gas turbine is the technical system, the at least one operation parameter includes combustion temperature, inlet pressure, exhaust pressure, etc. In another example, if a diagnostic system is the technical system, the at least one operation parameter may include copy number variations of an individual's DNA (Deoxyribonucleic acid), white blood cell count, red blood cell count, etc.

The method employs a data processing system to compute a probability value for each of the data points in a dataset of the one or more datasets. In an embodiment, each of the one or more datasets may relate to an individual operation parameter of the technical system. Accordingly, the probability values of the data points for the individual operation parameter are computed using the data processing system. For example, in a gas turbine the one or more datasets include data points for operation parameters such as combustion temperature, inlet pressure etc. The probability values of the data points relating to the combustion temperature are determined independently from the probability values of the data points of the inlet pressure. In another embodiment, the one or more datasets relate to individual time periods for which the data is recorded. For example, a dataset of the one or more datasets relates to the data points recorded in a particular month. Accordingly, the probability values of the data points are computed for one or more operation parameters in the technical system for the particular month. The present invention discloses computing probability values by comparing density of a data point in the dataset to the densities of neighboring data points in the dataset.

Further, the data processing system computes a non-parametric distribution of the probability values of the data points in the dataset. In an example embodiment, the non-parametric distribution is a box plot of the probability values of the data points. The box plot is a representation of the probability values of the data points in the dataset in the form of a box and whiskers. The probability values of the data points distributed outside the box are known as whiskers. The data points whose probability values are represented as whiskers are indicative of an error condition in the technical system. Accordingly, the method includes the step of identifying at least one data point indicative of the at least one error condition associated with the technical system, based on the non-parametric distribution of the probability values of the data points. For example, in an embodiment where the non-parametric distribution is a box plot, the data points whose probability values are represented as whiskers may signify that the data points could have been wrongly recorded due to a faulty sensor in the technical system.

The data processing system further determines and outputs the at least one error condition based on the identified data points and the at least one operation parameter of the technical system. For example, the error condition is output on a display device such as a monitor of the data processing system. The data processing system determines the error condition by mapping the data points identified as indicative of the error condition with the error condition. For example, if the data point indicative of error condition relates to inlet pressure at time tx, the data processing system will compare preset permitted inlet pressure range for time tx with the inlet pressure at time tx. If the inlet pressure at time tx does not fall within the preset permitted inlet pressure range, then the data processing system determines that the error condition is in the inlet pressure at time tx.

In an embodiment, the data points indicative of the error condition associated with the technical system are mapped to error conditions based on look-up tables. For example, a look-up table comprises the probability value, operation parameter of the technical system, time stamp of the data point associated with the probability value etc. In an embodiment, the data processing system determines the operation parameter associated with the data point identified as relating to the error condition. Further, the data processing system determines whether the data point is outside a predetermined permitted value for the operation parameter. Additionally, the data processing system determines whether the identified data point has nexus with operating conditions of the technical system. For example, if the technical system has experienced an expected power shutdown at time t1 and the data point identified as relating to the error condition has the time stamp t1. Accordingly, the data processing system determines the nexus between the expected power failure and the identified data point and does not output an error condition. Therefore, the method of automatically determines the error condition by determining data point density and data point distance with respect to the neighboring data points. This method is advantageous as it more accurately identifies the data points indicative of the error condition associated with the technical system.

In a preferred embodiment, the data processing system determines whether each of the data points in the one or more datasets is a unique data point. The one or more datasets include data points having the same value. As used herein, a "unique data point" is a data point whose value does not repeat in the dataset. In an embodiment, the "unique data point" comprises data points having same value but recorded at different time instants. The data processing system substitutes the data points with the unique data points to generate the one or more datasets. In one embodiment, the data processing system filters the data points in the datasets to remove data points with repetitive values. The remaining data points are the unique data points that are retained in the datasets. The substitution of unique data points instead of entire set of the data points is advantageous in view of reducing redundant data points in the datasets and thereby significantly reducing the computational costs in identifying the data point that indicates the error condition associated with the technical system.

According to another preferred embodiment, the data processing system obtains the data points in the one or more datasets in time domain. The data processing system employs Fourier Transform to transform the data points from the time domain into frequency domain. In an embodiment, the Fourier transform is a Fast Fourier Transform. The data processing system identifies the data points whose frequency exceeds a preset cut-off frequency. As used herein, the "preset cut-off frequency" includes a range of permitted frequency values for a given operational parameter. For example, in the case of a gas turbine, the operation parameter of inlet pressure loss in the range of 4-7 mbar with a preset tolerance. The preset cut-off frequency is set based on the inlet pressure loss range and the preset tolerance. If the frequency of the data points exceeds the cut-off frequency, the data points are automatically identified as indicative of an error condition in the gas turbine. Further, the data processing system generates the one or more datasets by retaining the data points whose frequency does not exceed the preset cut-off frequency. By filtering the data points whose frequency exceeds the cut-off frequency, size of each of the datasets is reduced and thereby reduces the computational cost.

According to an embodiment of the present invention, the data processing system computes the probability value for each of the data points by computing standard deviation of the data points. Further, the data processing system determines the neighboring data points for a data point from the dataset. By computing the standard deviation and by determining the neighboring data points, density of the data points around a mean can be determined. Accordingly, the data processing system defines a cluster of the neighboring data points having a cluster boundary based the standard deviation of the data point. As used herein, "cluster" refers to a group of data points that are proximate to each other in value and having a boundary determined by the standard deviation of data points. The data processing system also computes a probabilistic distance between the cluster boundary, the neighboring data points and the data point. As used herein, "probability distance" includes the statistical extent to which the distance between the data points can vary. Computing the probabilistic distance is advantageous as it includes margin of error in calculation. The probability value of the data point is then computed based on the probabilistic distance of the data point from the cluster boundary and the neighboring data points. The data processing system performs the above steps for remaining data points in the dataset to arrive at the probability values of the data points in the dataset.

According to another embodiment, the data processing system simultaneously identifies the data points indicative of the at least one error condition in the dataset along with the remaining datasets of the one or more datasets. In an example embodiment, the data processing system comprises a multi-core processor having multiple processors to simultaneously identify the data points in the one or more datasets that are indicative of the at least one error condition.

According to the present invention also disclosed are a server and a network interface communicatively coupled to the server. Further, at least one technical system is communicatively coupled to the server via the network interface. In an embodiment, the server is a cloud server that communicates with the at least one technical system via the network interface. The server includes the data processing system for automatically determining at least one error condition associated with the at least one technical system.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
FIG 1 is a flowchart illustrating a method of automatically determining at least one error condition associated with a technical system;
FIG 2 illustrates a data processing system for automatically determining at least one error condition associated with a technical system;
FIG 3 illustrates a system including a server comprising the data processing system in FIG 2;
FIG 4A is a graph depicting data points in a dataset corresponding to at least one operation parameter associated with a technical system;
FIG 4B is a representation of probability values of the data points in FIG 4A and a box plot of the probability values;
FIG 4C is a matrix to verify whether an error condition exists in a technical system;
FIG 5A is a representation of probability values of data points in a dataset and a box plot of the probability values without a preset cut-off probability;
FIG 5B is a representation of the probability values of the data points in FIG 5A and a box plot of the probability values with the preset cut-off probability;
FIG 6A is a graph of data points in a dataset corresponding to a first parameter;
FIG 6B is a graph of data points in a dataset corresponding to a second parameter;
FIG 6C is a graph of data points indicating an error condition in a technical system for the first parameter and the second parameter;
FIG 7 is a representation of data points in one or more datasets associated with one or more operation parameter of a technical system in time series;
FIG 8A is a graph of data points in a dataset in a first time series;
FIG 8B is a graph of the data points in FIG 8A transformed in frequency domain; and
FIG 8C is a graph 830 of data points after transformation from frequency domain to time domain in a second time series.

Various embodiments are described with reference to the drawings, wherein like reference numerals are used to refer to like elements throughout. In the following description, a large gas turbine has been considered as an example of a technical system for the purpose of explanation. Further, numerous specific details are set forth in order to provide thorough understanding of one or more embodiments of the present invention. These examples must not be considered to limit the application of the invention to large gas turbine and includes any technical system for which error condition is automatically determined. It may be evident that such embodiments may be practiced without these specific details.

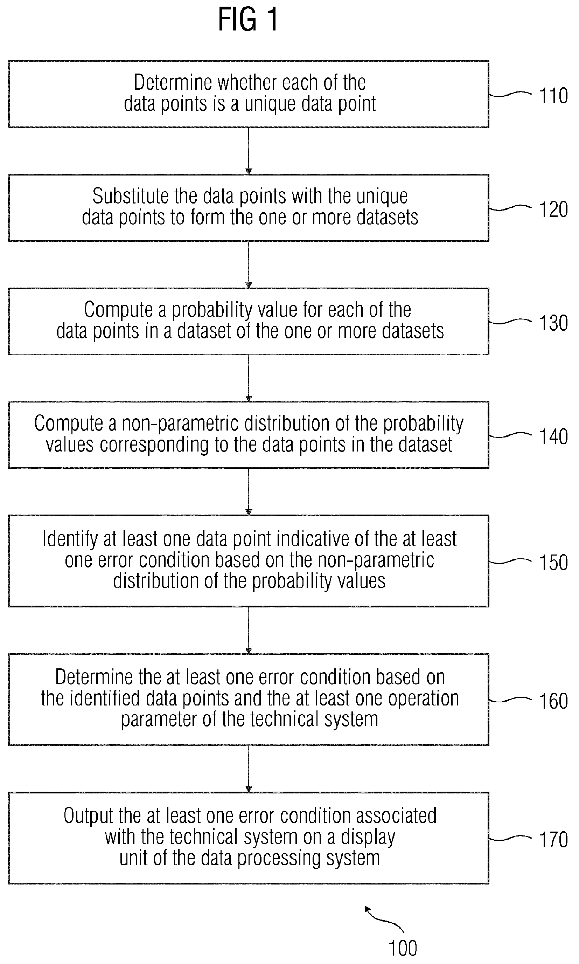

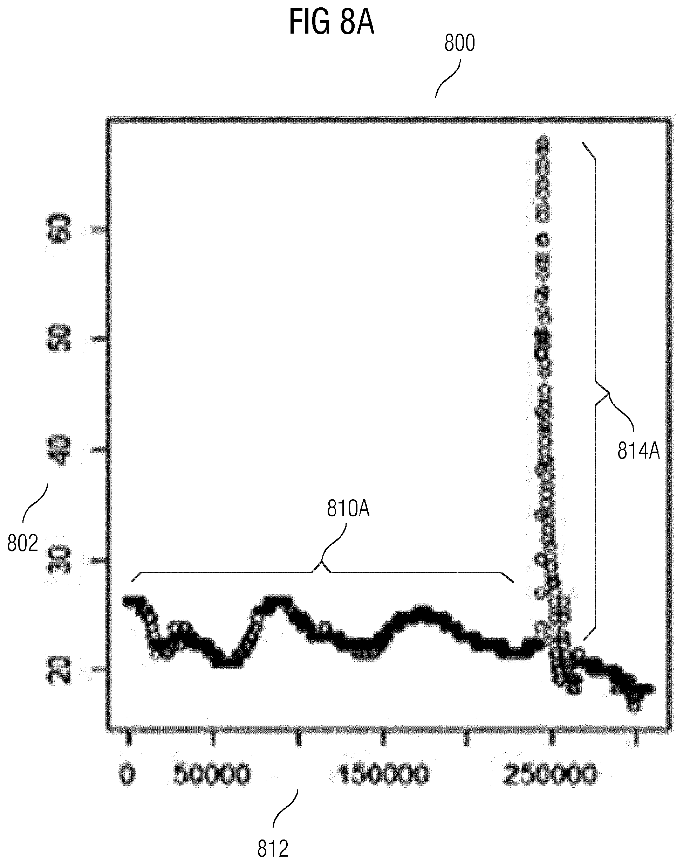

FIG 1 is a flowchart 100 illustrating a method of automatically determining at least one error condition associated with a technical system. The method begins with determining whether each of the data points is a unique data point at step 110 by a data processing system 200. In other words, the data processing system determines whether there are duplicate data points in datasets. At step 120, the data points in the datasets are substituted with the unique data points. The data processing system filters the duplicate data points from the datasets such that only the unique data points remain in the dataset. By filtering the duplicate data points, the data processing system is capable of computing large datasets with high accuracy. The data processing system also obtains the data points in the one or more datasets in time domain and transforms the data points from the time domain into frequency domain using a Fourier Transform. The data processing system identifies the data points whose frequency exceed a preset cut-off frequency and generates the one or more datasets by retaining the data points whose frequency magnitude does not exceed the preset cut-off frequency. Therefore, the data processing system filters data points from the datasets, if their frequency magnitude is higher than the preset cut-off frequency and thereby improving speed of computing large datasets. These steps are further explained in FIGs 8A-8C.

At step 130, the data processing system computes a probability value for each of the data points in a dataset of the one or more datasets. The data processing system computes the probability values by computing standard deviation of the data points. The data processing system also determines the neighboring data points for a data point from the dataset and defining a cluster of the neighboring data points having a cluster boundary based the standard deviation of the data point. Further, a probabilistic distance between the cluster boundary, the neighboring data points and the data point is computed. The probabilistic distance of the data point from the cluster boundary and the neighboring data points is used to compute the probability value of the data point. These steps to compute the probability value is repeated on remaining data points in the dataset.

At step 140, the data processing system computes a non-parametric distribution of the probability values corresponding to the data points in the dataset. The non-parametric distribution of the probability values is achieved by plotting the probability values on a box plot. Based on the non-parametric distribution of the probability values the data processing system identifies at least one data point indicative of the at least one error condition associated with the technical system, at step 150. The data processing system is capable of parallel identifying the data points indicative of error condition in all the datasets. As used herein, "data points indicative of error condition" include a data spike or outliers in the datasets.

By identifying the data points indicative of the at least one error condition the data processing system at step 160 determines the at least one error condition based on the identified data points and the at least one operation parameter of the technical system. Further, at step 170 the error condition associated with the technical system is output on a display unit of the data processing system 200.

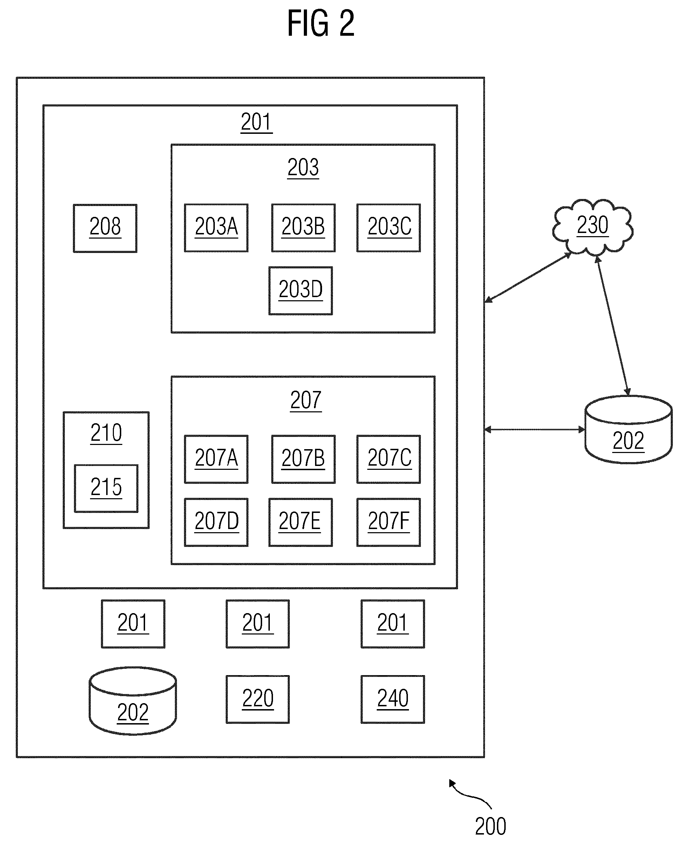

FIG 2 illustrates the data processing system 200 for automatically determining at least one error condition associated with a technical system. The data processing system 200 according to the present invention is installed on and accessible by a user device, for example, a personal computing device, a workstation, a client device, a network enabled computing device, any other suitable computing equipment, and combinations of multiple pieces of computing equipment. The data processing system 200 disclosed herein is in operable communication with a database 202 over a communication network 230. The database 202 is, for example, a structured query language (SQL) data store or a not only SQL (NoSQL) data store. In an embodiment of the database 202 according to the present invention, the database 202 can also be a location on a file system directly accessible by the data processing system 200. In another embodiment of the database 202 according to the present invention, the database 202 is configured as cloud based database implemented in a cloud computing environment, where computing resources are delivered as a service over the network 230. As used herein, "cloud computing environment" refers to a processing environment comprising configurable computing physical and logical resources, for example, networks, servers, storage, applications, services, etc., and data distributed over the network 230, for example, the internet. The cloud computing environment provides on-demand network access to a shared pool of the configurable computing physical and logical resources. The communication network 230 is, for example, a wired network, a wireless network, a communication network, or a network formed from any combination of these networks.

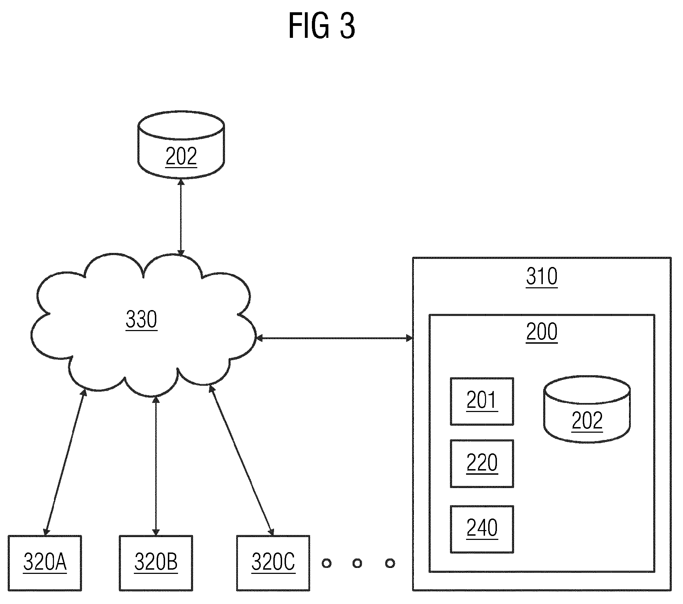

In a preferred embodiment according to the present invention, the data processing system 200 is downloadable and usable on the user device. In another embodiment according to the present invention, the data processing system 200 is configured as a web based platform, for example, a website hosted on a server or a network of servers. In another embodiment according to the present invention, the data processing system 200 is implemented in the cloud computing environment. The data processing system 200 is developed, for example, using Google App engine cloud infrastructure of Google Inc., Amazon Web Services® of Amazon Technologies, Inc., as disclosed hereinafter in FIG 3. In an embodiment, the data processing system 200 is configured as a cloud computing based platform implemented as a service for analyzing data.

The data processing system 200 disclosed herein comprises a memory 201 and at least one processor 220 communicatively coupled to the memory. As used herein, "memory" refers to all computer readable media, for example, non-volatile media, volatile media, and transmission media except for a transitory, propagating signal. The memory is configured to store computer program instructions defined by modules, for example, 203, 207, 210, 215, etc., of the data processing system 200. The processor 220 is configured to execute the defined computer program instructions in the modules. Further, the processor 220 is configured to execute the instructions in al the memory 201 simultaneously. As illustrated in FIG 2, the data processing system 200 comprises a display unit 240. Additionally, a user using the user device can access the data processing system 200 via a GUI (graphic user interface). The GUI is, for example, an online web interface, a web based downloadable application interface, etc.

The data processing system 200 further comprises a dataset generation module 203, a computation unit 207, an identification module 208, and an error determination module 210. The dataset generation module 203 comprises a data acquisition module 203A, a unique data point module 203B, a frequency transform module 203C and a frequency filter module 203D. The data acquisition module 203A obtains data points of one or more datasets, for example, from the database 202 recorded by the sensors of a technical system. The unique data point module 203B removes duplicate data points from the one or more datasets. Further, the frequency transform module 203C transforms the datasets from time domain to frequency domain using Fourier Transform. The transformed data is analyzed for data points whose frequency magnitude is higher than a preset cut-off frequency by the frequency filter module 203D. The data points whose frequency magnitude is higher than the preset cut-off frequency is removed by the frequency filter module 203D. Accordingly, the dataset generation module 203 generates one or more datasets each comprising the remaining data points corresponding to at least one operation parameter associated with the technical system. Hereinafter for the purpose of explaining FIG2, the term "data points" relates only to the data points that remain after removing duplicate data points and the data points whose frequency magnitude is higher than the preset cut-off frequency.

The computation unit 207 computes a probability value for each of the data points in a dataset of the one or more datasets, using the processor 220. The computation unit 207 includes a standard deviation module 207A, neighbor determination module 207B, a cluster module 207C, a distance module 207D, a probability module 207E and a distribution module 207F. The standard deviation module 207A determines standard deviation of the data points. The neighbor determination module 207B determines the neighboring data points for the data points from the dataset. The cluster module 207C defines a cluster of the neighboring data points having a cluster boundary based on the standard deviation of the data points. The distance module 207D computes a probabilistic distance between the cluster boundary, the neighboring data points and the data point. Thereafter, the probability module 207E computes the probability value of the data points based the probabilistic distance of the data points from the cluster boundary and the neighboring data points. Further, the distribution module 207F computes a non-parametric distribution of the probability values corresponding to the data points in the dataset.

The identification module 208 identifies data points indicative of the error condition associated with the technical system, based on the non-parametric distribution of the probability values. The processor 220 is configured to simultaneously identifies the data points indicative of the at least one error condition in the datasets by parallel computing. Thereafter, the error determination module 210 determines the error condition based on the identified data points and the operation parameter of the technical system. The error determination module 210 includes a verification module 215 for verifying whether the identified data points are indicative of the at least one error condition in the technical system. Further, the display unit 240 outputs the error condition associated with the technical system via the GUI.

FIG 3 illustrates a system 300 including a server 310 comprising the data processing system 200 in FIG 2. The system 300 also comprises a network interface 330 communicatively coupled to the server 310 and technical systems 320A-320C communicatively coupled to the server 310 via the network interface 330. The server 300 includes the data processing system 200 for automatically determining the error condition associated with the technical systems 320A-320C. The technical systems 320A-320C are located in a remote location while the server 310 is located on a cloud server for example, using Google App engine cloud infrastructure of Google Inc., Amazon Web Services^{®} of Amazon Technologies, Inc., the Amazon elastic compute cloud EC2^{®} web service of Amazon Technologies, Inc., the Google^{®} Cloud platform of Google Inc., the Microsoft^{®} Cloud platform of Microsoft Corporation, etc.

The following graphs illustrate the working of the method disclosed in FIG 1. For the purpose of the graphs, data points illustrated in the graphs are unique data points. As used herein, a "unique data point" is a data point whose value does not repeat in the dataset. By filtering redundant data points, the computation time and effort, to determine the data points that indicate an error condition, is significantly reduced.

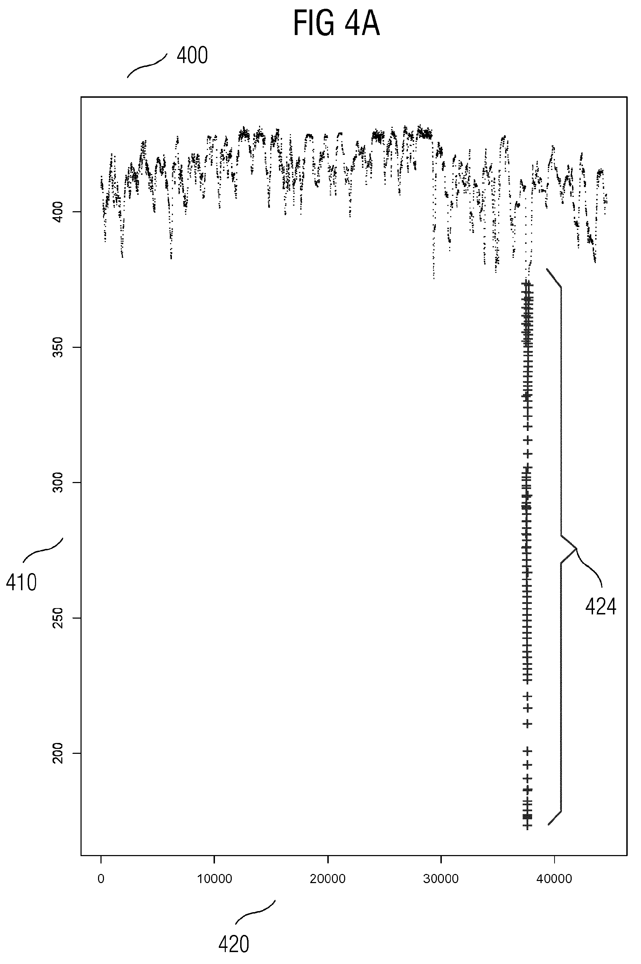

FIG 4A is a graph depicting data points 410 in a dataset 400 corresponding to at least one operation parameter associated with a technical system. The technical system for the purpose of the graph in FIG 4A is a large gas turbine and the dataset 400 includes temperature compressor outlet data points 410 for a month. Accordingly, the at least one operation parameter is compressor outlet temperature and the data points 410 are recorded by a temperature sensor. The y-axis on the graph indicates the data points 410 and associated indices 420 are indicated on the x-axis. As shown in FIG 4A, the data points 410 include a data spike 424. The data spike 424 is indicative of an error condition in the technical system. For the purpose of present invention the data spike 424 is also known as outlier.

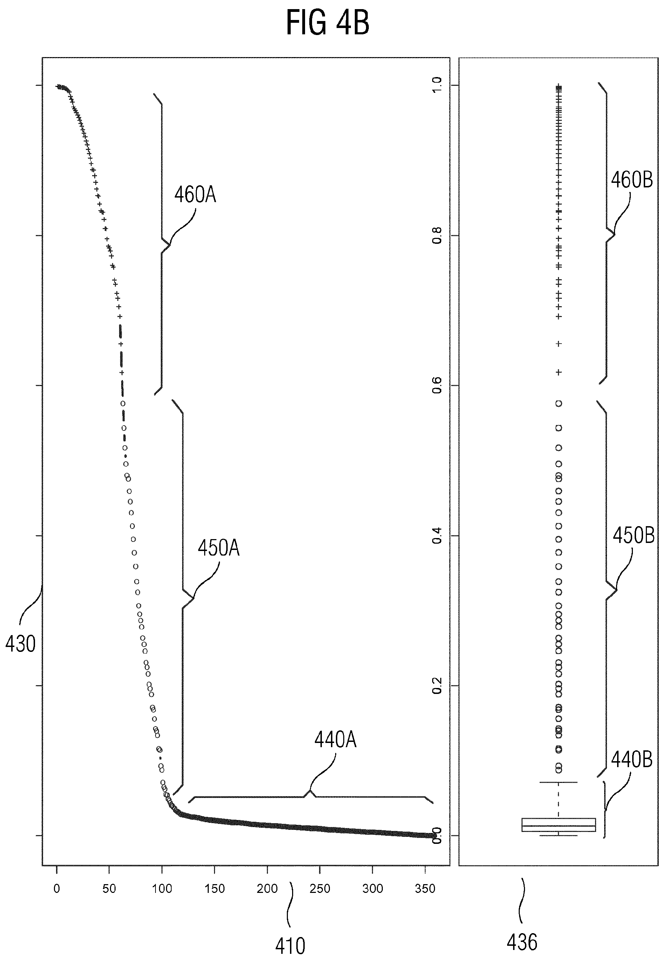

FIG 4B is a representation of probability values 430 of the data points 410 in the y-axis of FIG 4A and a box plot 436 of the probability values 430. As shown in FIG 4B, the data points 410 include data points 440a, 450a and 460a. Further, the box plot 436 comprises three sections 440b, 450b and 460b associated with data points 440a, 450a and 460a, respectively. The data points 440a have low probability values with less likelihood of indicating an error condition in the compressor outlet temperature. In other words, the low probability values indicate less likelihood of the data points 440a being outliers. While, data points 450a and 460a have higher likelihood of being outliers, indicative of an error condition in a compressor outlet of the large gas turbine. The data points 460a are classified as outliers based on comparison with a preset cut-off probability. While the data points 450a determined as outliers based on the box plot 436 indicated at 450b. The outliers are determined based on the method described in FIG 1 and it is advantageous as the method is capable of not only detecting the data points 460a as outliers but, is also capable of determining whether the data points 450a are outliers using the box plot 436. By detecting the outliers, associated error condition is determined by means of the method described in FIG 1.

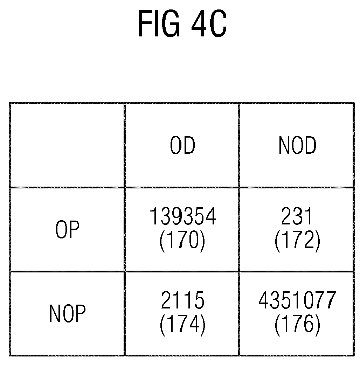

FIG 4C is a matrix to verify whether an error condition exists in the technical system. In the present example, the matrix is a confusion matrix that verifies whether the data points indicated as outliers are false positives 174 and false negatives 172. The verification is carried out on datasets, associated with an operation parameter, including data points for a period of two years. The verification is performed by comparing the error condition determined using the method disclosed in FIG 1 and actual error conditions in the technical system. As shown in Fig 4C, the number of false negatives 172 is significantly much lesser that true error detections. Therefore, the method of automatically detecting error condition according to the present invention has an accuracy of 97%.

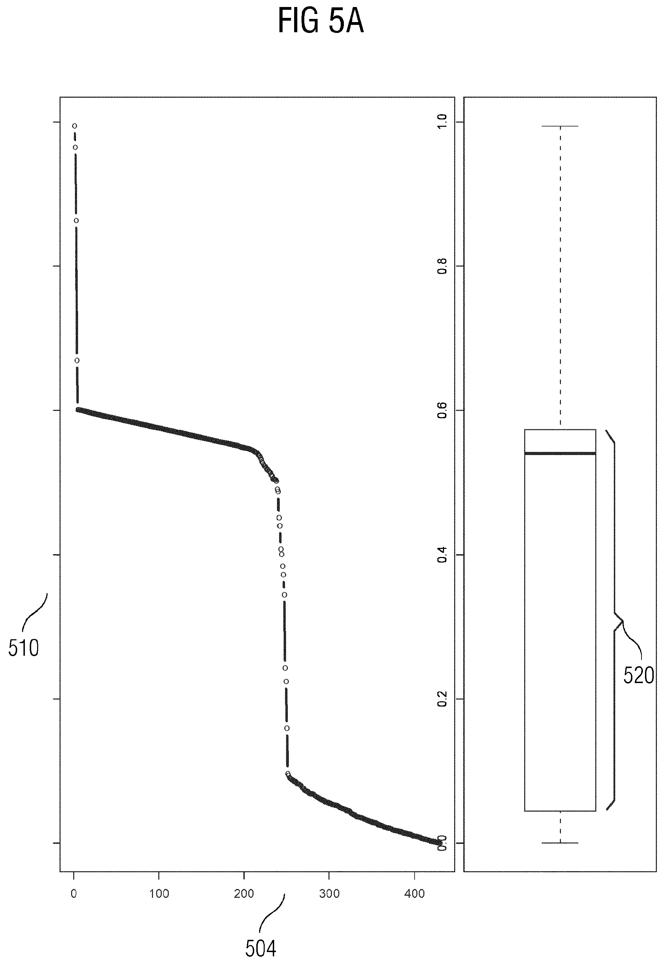

FIG 5A is a representation of probability values 510 of data points 504 in a dataset and a box plot 520 of the probability values 510 without a preset cut-off probability. The data points 504 in the x-axis of FIG 5A relate to temperature compressor outlet data points 504 of the large gas turbine with probability values 510 in the y-axis. The box plot 520 includes all the data points 504, with probability 510 values ranging from 0-1. Therefore, the box plot 520 implies that none of the data points 504 indicate an error condition in the temperature compressor of the large gas turbine.

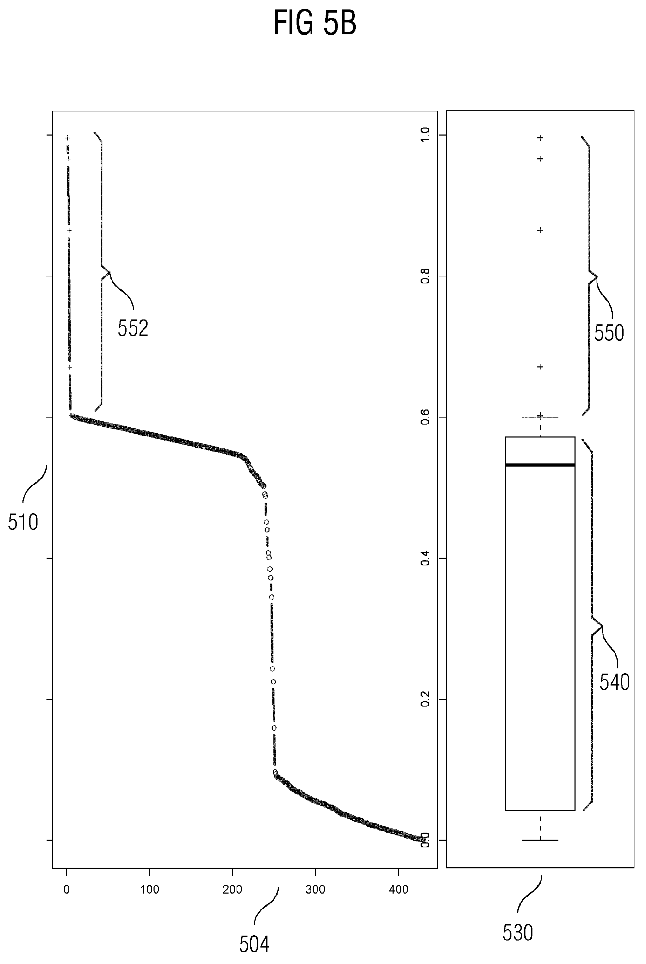

FIG 5B is a representation of the probability values 510 of the data points 504 in FIG 5A and a box plot 530 of the probability values 510 with the preset cut-off probability. As seen in Fig 5B, the box plot 530 comprises two sections 540 and 550, wherein section 550 corresponds to the data points 552 with probability values greater than the preset cut-off probability of 0.6. In the present example, the preset cut-off probability is based on principles of physics that govern the large gas turbine. Accordingly, by comparing FIGs 5A and 5B the box plot 520 has a tendency to miss reporting data points 552 with high probability values as indicative of error condition (i.e. outliers).

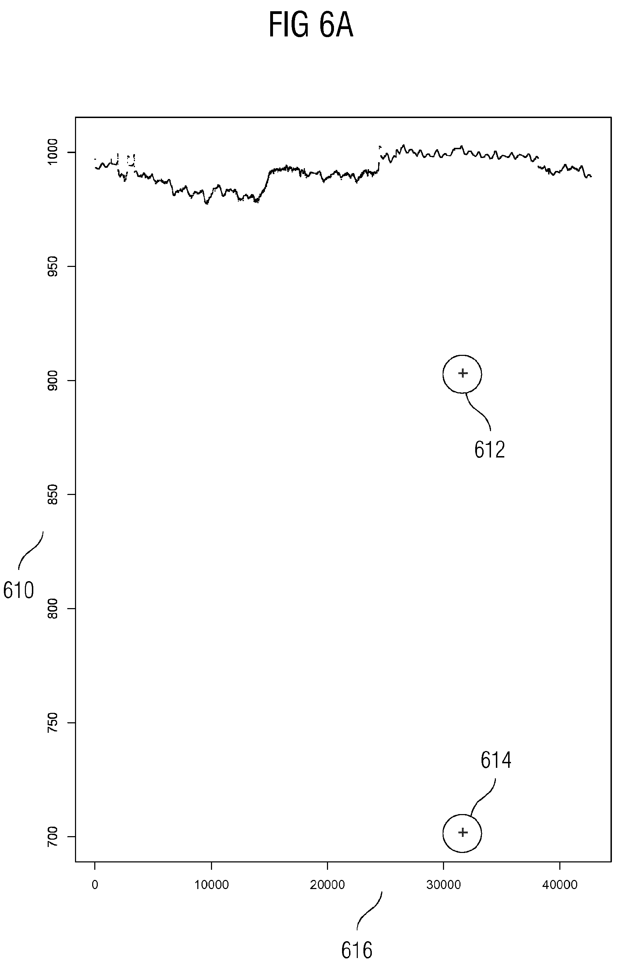

FIG 6A is a graph of data points 610 in a dataset corresponding to a first parameter. The dataset includes compressor inlet pressure data points 610 on the y-axis with indices 616 on the x-axis. Accordingly, the first parameter is the compressor inlet pressure. As shown in FIG 6A, the data points 610 include inlet outliers 612 and 614 that are determined by the method disclosed in the present invention

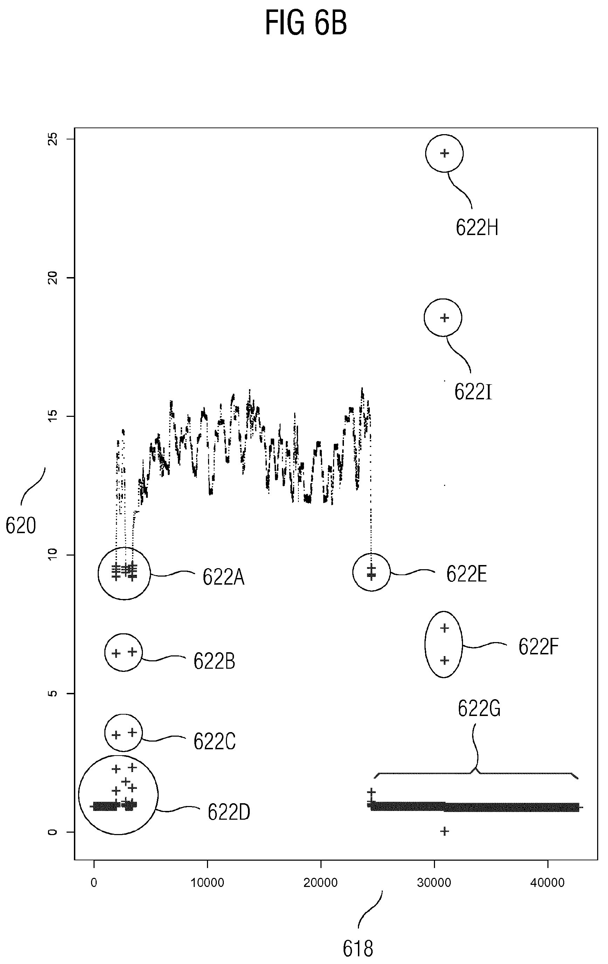

FIG 6B is a graph of data points in a dataset corresponding to a second parameter. The dataset includes compressor outlet pressure data points 620 on the y-axis with indices 618 on the x-axis. Accordingly, the second parameter is the compressor outlet pressure. As shown in FIG 6B, the data points 620 include outlet outliers 622a-622g that are determined by the method disclosed in the present invention.

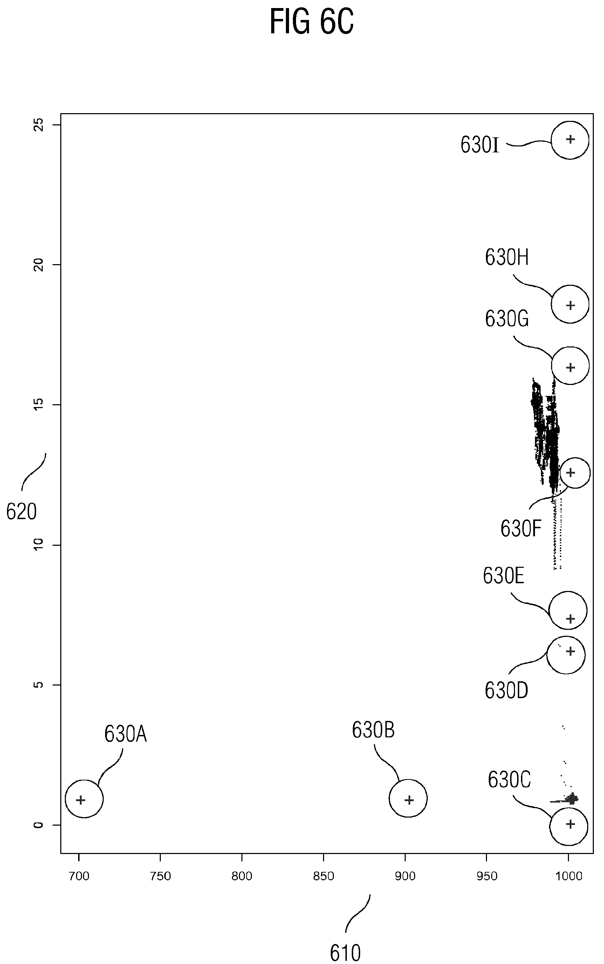

FIG 6C is a graph of data points 630a-630i indicating an error condition in a technical system for the first parameter and the second parameter. The graph includes compressor inlet pressure data points 610 on the x-axis and compressor outlet pressure data points 620 on the y-axis. Therefore, data points 630a-630i indicates the error condition in compressor pressure based on the combination of inlet outliers 612 and 614 and outlet outliers 622a-622g. This method of considering multiple parameters is useful to understand interdependency of the data points 612, 614 and 622a-622g while determining the error condition in the compressor pressure of the large gas turbine.

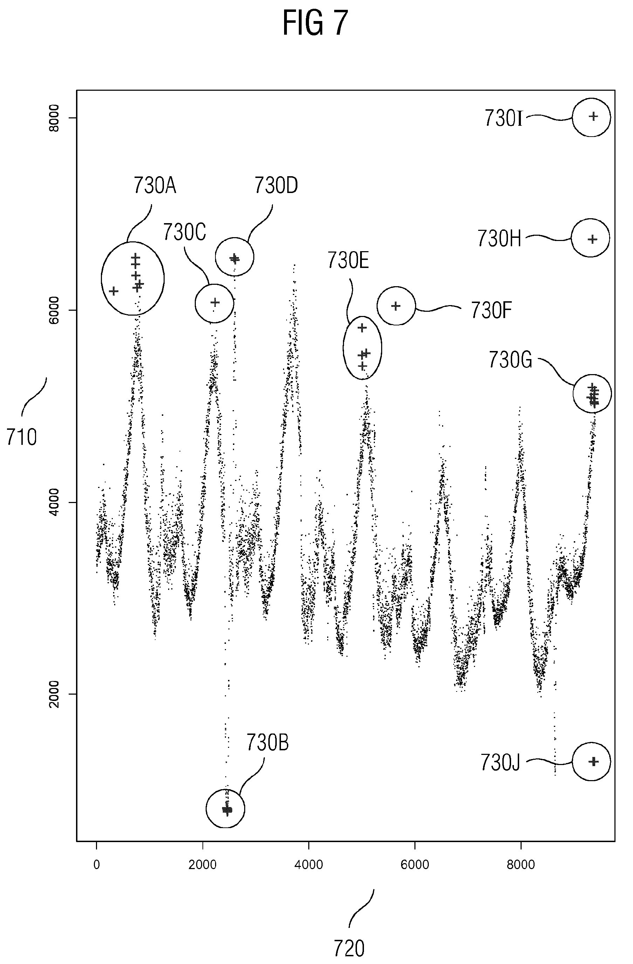

FIG 7 is a representation of data points 710 in one or more datasets associated with one or more operation parameter of a technical system in time series. The technical system for the purpose of FIG 7 is a large gas turbine. The time 720 is provided on the x-axis and data points 710 are provided on the y-axis. The data points 710 include data points 730a-730i that indicate an error condition (i.e. outliers). The operation parameters considered include compressor inlet pressure, compressor outlet pressure, engine rotation speed, compressor outlet temperature and compressor inlet temperature. In view of the different operation parameters, the data points 710 are recorded in different units. Therefore, the method disclosed in the present invention normalizes the data points 710 to negate bias due to difference in units of the data points 710. As indicated hereinabove, by considering multiple operation parameters the method is capable of determining the interdependency of operation of components of the large gas turbine. Additionally, by considering time as a dependent, the method is capable of detecting effect of wear and tear of the components in the performance of the large gas turbine. The FIGs 8A-8C illustrate how the method is capable of handing large datasets by employing Fourier Transform to convert the data points from time domain to frequency domain. Thereafter, filtering the data points based on a preset cut-off frequency.

FIG 8A is a graph 800 of data points 810a in a dataset in a first time series 812. As seen in FIG 8A, the first time series 812 is provided on the x-axis and magnitudes of the data points 810a are provided on the y-axis. Further, the magnitudes of the data points 810a is in the range of 0-80, including a data spike (outliers) 814a in the range of 30-80.

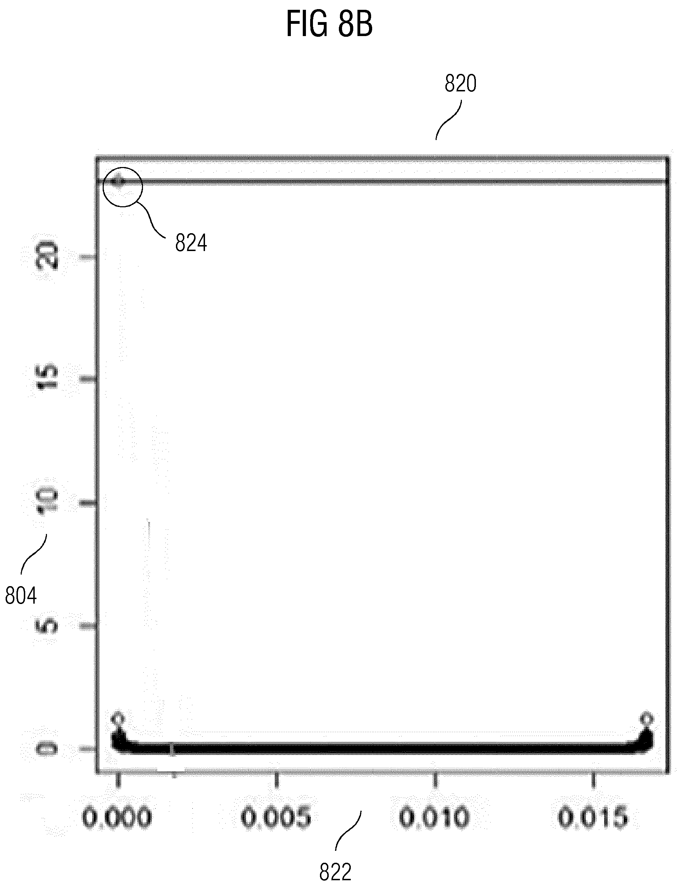

FIG 8B is a graph 820 of the data points 810a in FIG 8A transformed in frequency domain. As seen in FIG 8B, frequency 822 is provided on the x-axis and magnitudes of the data points 810a are provided on the y-axis. The graph 820 also indicates a preset cut-off frequency 824. The graph 820 is used to filter data points whose frequency magnitudes exceed the preset cut-off frequency from the dataset.

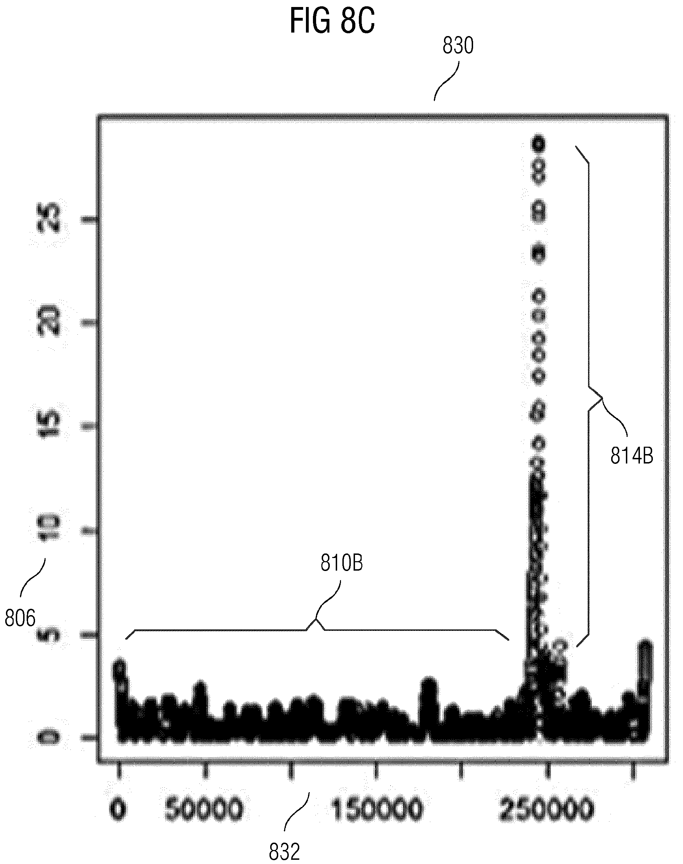

FIG 8C is a graph 830 of data points 810b after transformation from frequency domain to time domain in a second time series 832. As seen in FIG 8C, the magnitudes of the data points 810b is within the range 0-30, including a data spike 814b in the range of 10-30. Comparing FIG 8A with FIG 8C, it is apparent that the data points that with high magnitudes have been removed. Accordingly, these data points are automatically considered as outliers and indicative of an error condition in the technical system. Additionally, the data points 810b are analyzed for outliers by assigning probability values and by plotting the probability values on a box plot.

It will be readily apparent that the various methods, algorithms, and modules disclosed herein may be implemented on computer readable media appropriately programmed for computing devices. The modules that implement the methods and algorithms disclosed herein may be stored and transmitted using a variety of media, for example, the computer readable media in a number of manners. In an embodiment, hard-wired circuitry or custom hardware may be used in place of, or in combination with, software instructions for implementation of the processes of various embodiments. Therefore, the embodiments are not limited to any specific combination of hardware and software. In general, the modules comprising computer executable instructions may be implemented in any programming language. The modules may be stored on or in one or more mediums as object code. Various aspects of the method and system disclosed herein may be implemented in a non-programmed environment comprising documents created, for example, in a hyper-text markup language (HTML), an extensible markup language (XML), or other format that render aspects of a graphical user interface (GUI) or perform other functions, when viewed in a visual area or a window of a browser program. Various aspects of the method and system disclosed herein may be implemented as programmed elements, or non-programmed elements, or any suitable combination thereof.

Where databases comprising data points are described, it will be understood by one of ordinary skill in the art that (i) alternative database structures to those described may be readily employed, and (ii) other memory structures besides databases may be readily employed. Any illustrations or descriptions of any sample databases disclosed herein are illustrative arrangements for stored representations of information. Any number of other arrangements may be employed besides those suggested by tables illustrated in the drawings or elsewhere. Similarly, any illustrated entries of the databases represent exemplary information only; one of ordinary skill in the art will understand that the number and content of the entries can be different from those disclosed herein. Further, despite any depiction of the databases as tables, other formats including relational databases, object-based models, and/or distributed databases may be used to store and manipulate the data types disclosed herein. Likewise, object methods or behaviors of a database can be used to implement various processes such as those disclosed herein. In addition, the databases may, in a known manner, be stored locally or remotely from a device that accesses data in such a database. In embodiments where there are multiple databases in the system, the databases may be integrated to communicate with each other for enabling simultaneous updates of data linked across the databases, when there are any updates to the data in one of the databases.

The present invention can be configured to work in a network environment comprising one or more computers that are in communication with one or more devices via a network. The computers may communicate with the devices directly or indirectly, via a wired medium or a wireless medium such as the Internet, a local area network (LAN), a wide area network (WAN) or the Ethernet, a token ring, or via any appropriate communications mediums or combination of communications mediums. Each of the devices comprises processors, some examples of which are disclosed above, that are adapted to communicate with the computers. In an embodiment, each of the computers is equipped with a network communication device, for example, a network interface card, a modem, or other network connection device suitable for connecting to a network. Each of the computers and the devices executes an operating system, some examples of which are disclosed above. While the operating system may differ depending on the type of computer, the operating system will continue to provide the appropriate communications protocols to establish communication links with the network. Any number and type of machines may be in communication with the computers.

The present invention is not limited to a particular computer system platform, processor, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of systems, and is not limited to any particular distributed architecture, network, or communication protocol.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may affect numerous modifications thereto and changes may be made without departing from the scope and spirit of the invention in its aspects.

## Claims

1. A computer implemented method (100) of automatically determining at least one error condition associated with a technical system (320A-320C), comprising:
generating one or more datasets each comprising data points corresponding to at least one operation parameter associated with the technical system (320A-320C);
computing, using a data processing system (200), a probability value for each of the data points in a dataset of the one or more datasets;
computing a non-parametric distribution of the probability values corresponding to the data points in the dataset;
identifying at least one data point indicative of the at least one error condition associated with the technical system 320A-320C, based on the non-parametric distribution of the probability values;
determining the at least one error condition based on the identified data points and the at least one operation parameter of the technical system (320A-320C); and
outputting the at least one error condition associated with the technical system (320A-320C) on a display unit 240 of the data processing system (200).

2. The method (100) of claim 1, generating the one or more datasets each comprising data points corresponding to at least one operation parameter associated with the technical system (320A-320C), comprises:
determining whether each of the data points is a unique data point; and
substituting the data points with the unique data points to generate the one or more datasets.

3. The method (100) of claim 1, wherein generating the one or more datasets each comprising data points corresponding to at least one operation parameter associated with the technical system 320A-320C, comprises:
obtaining the data points in the one or more datasets in time domain;
transforming the data points from the time domain into frequency domain using a Fourier Transform;
identifying the data points whose frequency exceed a preset cut-off frequency; and
generating the one or more datasets by retaining the data points whose frequency does not exceed the preset cut-off frequency.

4. The method (100) of claim 1, wherein computing the probability value for each of the data points comprises:
computing standard deviation of the data points;
determining the neighboring data points for a data point from the dataset;
defining a cluster of the neighboring data points having a cluster boundary based the standard deviation of the data point;
computing a probabilistic distance between the cluster boundary, the neighboring data points and the data point;
computing the probability value of the data point based on the probabilistic distance of the data point from the cluster boundary and the neighboring data points; and
repeating the steps performed for the data point on for remaining data points in the dataset.

5. The method (100) of claim 1, wherein determining the at least one error condition based on the identified data points and the at least one operation parameter of the technical system (320A-320C), comprises:
verifying whether the identified data points are indicative of the at least one error condition in the technical system (320A-320C).

6. The method (100) of claim 1, further comprising:
simultaneously identifying the data points indicative of the at least one error condition in the dataset along with the remaining datasets of the one or more datasets.

7. A data processing system (200) for automatically determining at least one error condition associated with a technical system (320A-320C), comprising:
at least one processor (220);
a memory (210) communicatively coupled to the at least one processor (220), the memory (210) comprising:
a dataset generation module (203) for generating one or more datasets each comprising data points corresponding to at least one operation parameter associated with the technical system (320A-320C);
a computation unit (207) for computing, using the at least one processor (220), a probability value for each of the data points in a dataset of the one or more datasets and computing a non-parametric distribution of the probability values corresponding to the data points in the dataset;
an identification module (208) for identifying at least one data point indicative of the at least one error condition associated with the technical system (320A-320C), based on the non-parametric distribution of the probability values;
an error determination module (210) determining the at least one error condition based on the identified data points and the at least one operation parameter of the technical system (320A-320C); and
a display unit (240) for outputting the at least one error condition associated with the technical system (320A-320C).

8. The data processing system (200) of claim 7, wherein the dataset generation module (203) comprises:
a unique data point module (203B) for determining whether each of the data points is a unique data point, and substituting the data points with the unique data points to generate the one or more datasets.

9. The data processing system (200) of claim 7, wherein the dataset generation module (203) comprises:
a data acquisition module (203A) for obtaining the data points in the dataset in time domain;
a frequency transform module (203C) for transforming the data points from the time domain into frequency domain using a Fourier Transform; and
a frequency filter module (203D) for identifying the data points whose frequency exceed a preset cut-off frequency, and generating the one or more datasets by retaining the data points whose frequency does not exceed the preset cut-off frequency.

10. The data processing system (200) of claim 7, wherein the computation unit (207) comprises:
a standard deviation module (207A) for determining standard deviation of the data points;
a neighbor determination module (207B) for determining the neighboring data points for a data point from the dataset;
a cluster module (207C) for defining a cluster of the neighboring data points having a cluster boundary based on the standard deviation of the data points;
a distance module (207D) for computing a probabilistic distance between the cluster boundary, the neighboring data points and the data point; and
a probability module (207E) for computing the probability value of the data point based the probabilistic distance of the data point from the cluster boundary and the neighboring data points.

11. The data processing system (200) of claim 7, wherein the error determination module comprises:
a verification module (215) for verifying whether the identified data points are indicative of the at least one error condition in the technical system (320A-320C).

12. The data processing system (200) of claim 7, wherein the processor simultaneously identifies the data points indicative of the at least one error condition in the dataset along with the remaining datasets of the one or more datasets.

13. A system comprising:
a server (310);
a network interface (330) communicatively coupled to the server (310); and
at least one technical system (320A-320C) communicatively coupled to the server via the network interface (330), wherein the server includes a data processing system (200) for automatically determining at least one error condition associated with the at least one technical system (320A-320C), the data processing system (200) comprising:
at least one processor (220);
a memory (210) communicatively coupled to the at least one processor (220), the memory (210) comprising:
a dataset generation module (203) for generating one or more datasets each comprising data points corresponding to at least one operation parameter associated with the at least one technical system (320A-320C);
a computation unit (207) for computing, using the at least one processor (220), a probability value for each of the data points in a dataset of the one or more datasets and computing a non-parametric distribution of the probability values corresponding to the data points in the dataset;
an identification module (208) for identifying at least one data point indicative of the at least one error condition associated with the technical system (320A-320C), based on the non-parametric distribution of the probability values;
an error determination module (210) determining the at least one error condition based on the identified data points and the at least one operation parameter of the at least one technical system (320A-320C); and
a display unit (240) for outputting the at least one error condition associated with the at least one technical system (320A-320C).

14. The server of claim 13, wherein the dataset generation module (203) of the data processing system (200) comprises:
a unique data point module (203B) for determining whether each of the data points is a unique data point, and substituting the data points with the unique data points to generate the one or more datasets;
a data acquisition module (203A) for obtaining the data points in the dataset in time domain;
a frequency transform module (203C) for transforming the data points from the time domain into frequency domain using a Fourier Transform; and
a frequency filter module (203D) for identifying the data points whose magnitude exceed a preset cut-off frequency , and generating the one or more datasets by retaining the data points whose frequency does not exceed the preset cut-off frequency.

15. The server of claim 13, wherein the computation unit 207 of the data processing system 200 comprises:
a standard deviation module (207A) for determining standard deviation of the data points;
a neighbor determination module (207B) for determining the neighboring data points for a data point from the dataset;
a cluster module (207C) for defining a cluster of the neighboring data points having a cluster boundary based on the standard deviation of the data points;
a distance module (207D) for computing a probabilistic distance between the cluster boundary, the neighboring data point and the data point; and
a probability module (207E) for computing the probability value of the data point based on the probabilistic distance of the data point from the cluster boundary and the neighboring data points.
